# EUROPEAN PATENT SPECIFICATION

(11) **EP 2 312 600 B1**
(45) Date of publication and mention of the grant of the patent: **21.03.2012**
(21) Application number: 11153236.2
(22) Date of filing: 29.10.2007
(51) Int. Cl.: H01H 13/70, H04M 1/22

(54) **Illuminated key-pad assembly**
Beleuchtete Tastaturbaugruppe
Ensemble clavier illuminé

(43) Date of publication of application: 20.04.2011
(62) Divisional of application: 07119553.1
(73) Proprietor: Research In Motion Limited, Waterloo, ON N2L 3W8 (CA)
(72) Inventor: Chen, Chao Carl, Waterloo Ontario N2T 2T8 (CA); Kyowski, Timothy Herbert, Brantford Ontario N3P 1Z8 (CA); Penner, Dennis James, Wellesley Ontario N0B 2T0 (CA)
(74) Representative: Moore, Barry

(56) References cited:
- EP-A1- 1 830 123
- EP-A2- 1 106 419
- US-A1- 2005 068 202

## Description

This technology relates to illuminated key-pads, especially of the kind as used in cell-phones, personal digital assistants (PDAs) and the like. Generally, such key-pads are illuminated by the use of transparent or translucent light-transmitting films or sheets, which receive light from a light emitting diode (LED) provided for the purpose, and powered by the battery in the PDA.

In traditional designs of illuminated key-pad units, the LED has been mounted in the key-pad unit itself, and has been connected to the main circuit board of the PDA by means of a flexible printed circuit (FCP) connector. In other designs, the light-transmitting film or light-guide has been placed underneath the whole key-pad unit; in these designs, in order for the light to reach the key-caps, the light had to pass through a number of components, whereby a significant proportion of the light was attenuated.

US-A-6575586 discloses a lighting unit that comprises a trough, a plurality of slots on a light penetration member attached at the bottom of a base, and an LED disposed in the trough. Fasteners are attached to the end of the feet of each key to join the key to the slots on the light penetration member. Each key is capable to move up and down freely with respect to the base. Another example is known from US-A-2005/068202.

In one aspect there is provided in the following an illuminated key-pad comprising:
a frame;
a set of keys assembled in at least two rows and mounted on the frame; and
at least two light strips disposed along the at least two rows of keys, the at least two light strips comprising a respective overface;
wherein the at least two light strips are linked at their ends by respective linking straps;
whereby the linking straps are formed with notches hooked under tenons formed in the frame.

In other aspects there is provided an illuminated key-pad unit, having depressible keys, according to dependent claims.

### DETAILED DESCRIPTION

By way of further explanation, an example of an illuminated key-pad unit for a PDA will now be described, with reference to the accompanying drawings, in which:
Fig.1 is a pictorial view of an illuminated key-pad unit, shown in association with the circuit-board of the PDA in which the key-pad unit is to be fitted.
Fig.2 is a sectioned-elevation on the line of the arrow 2 of Fig.1.
Fig.3 is a cross-section on the line 3-3 of Fig.2.
Fig.4 is a cross-section on the line 4-4 of Fig.2.
Fig.5 is a side elevational in the direction of the arrow 2 of Fig.1.
Fig.6 is a pictorial view of (part of) a light-strip component of the illuminated key-pad unit shown in Fig.1.
Fig.7 is a pictorial view of (part of) a frame component of the illuminated key-pad unit shown in Fig.1.

The scope of the patent protection sought herein is defined by the accompanying claims.

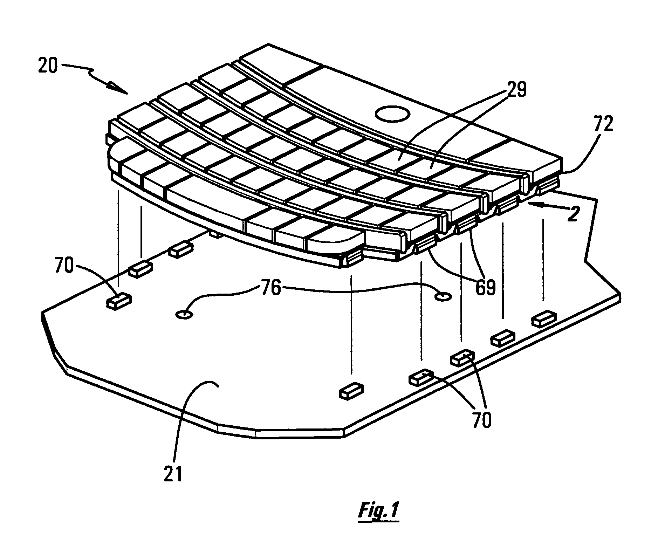

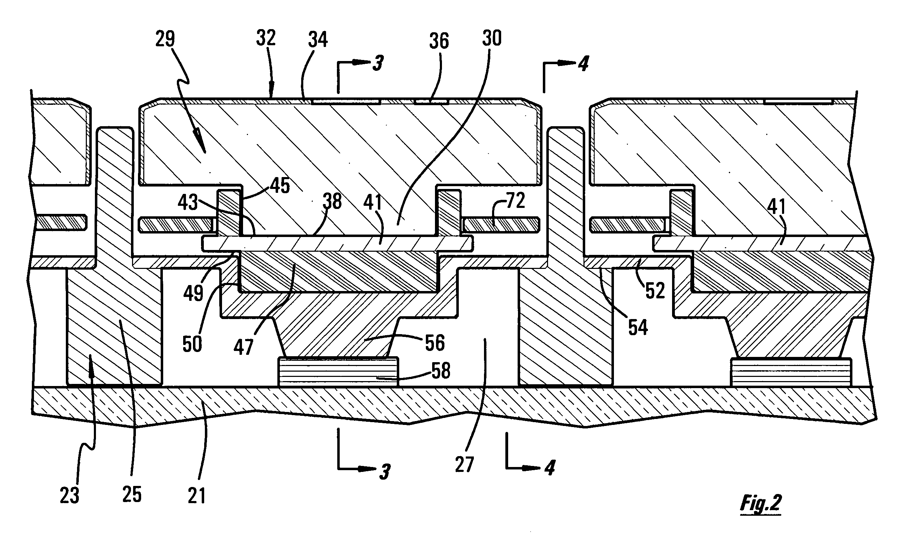

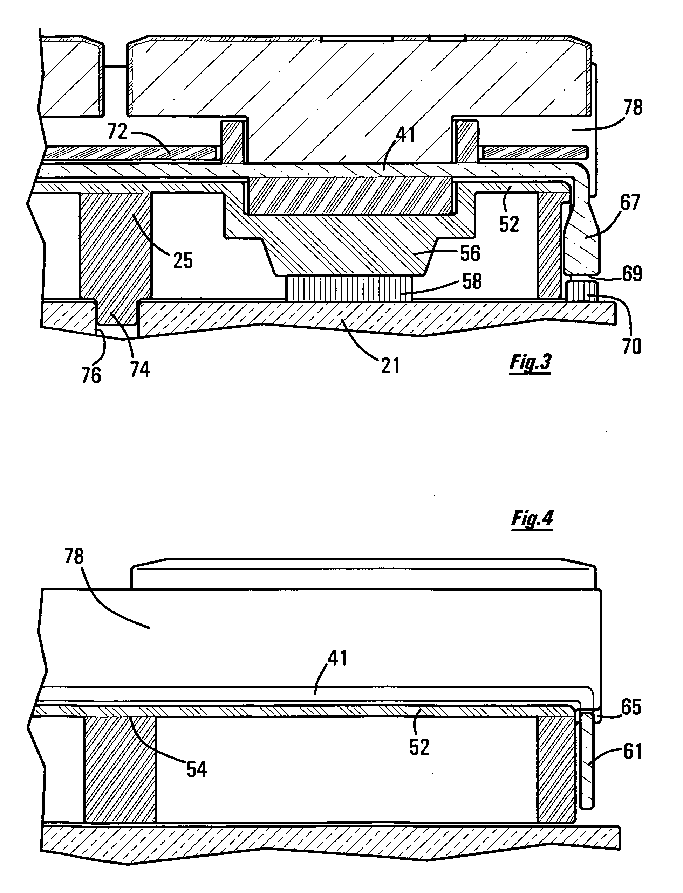

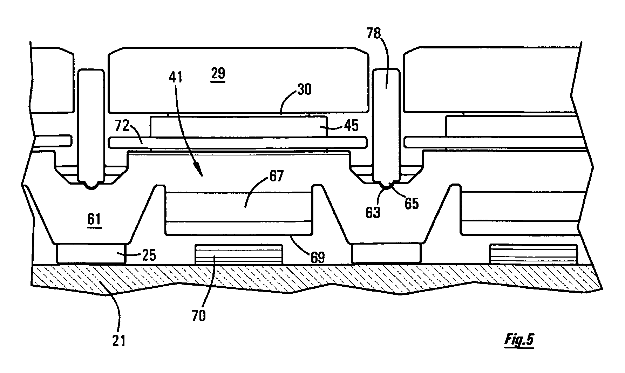

Figs.1-7 show an illuminated key-pad unit 20 that is designed for assembly to a printed circuit board (PCB) 21, for installation in a PDA.

The key-pad unit 20 includes a rigid plastic frame 23. The frame includes rails 25 which define spaces or pockets 27 between the rails. The pockets 27 correspond each to a particular key of the key-pad unit 20.

The key includes a key-cap 29, which is formed as a molding of transparent or translucent plastic. The key-cap molding includes an under-button 30, of the same material. The visible outer surface 32 of the key-cap 29 is provided with a mask or coating 34. Windows 36 formed in the coating 34 allow light to shine through the key-cap, to display the letter or numeral etc appropriate to that key.

Light is supplied to the under-surface 38 of the under-button 30 via a light-strip 41. The light-strip 41 comprises a thin film (of the order of e.g 0.4 mm thick) of transparent or translucent material, which transmits light received at one location of the light-strip 41 throughout the material. Thus, light emerges from the overface 43 of the light-strip 41 and is transmitted directly into the under-surface 38 of the under-button 30 of the key-cap 29, and out of the windows 36 in the coating 34 of the key-cap 29.

The under-surface 38 of the under-button 30 is glued to the overface 43 of the light-strip 41, both to physically secure the key-cap 29 to the light-strip 41, and to ensure efficient transmission of light therebetween.

The light-strip 41 is provided with button-receiving sockets 45, which are shaped to hold the respective key-caps 29 in a predetermined positional relationship with respect to the light-strip 41. The socket 45 is rectangular, and the under-button 30 is profiled to fit inside the hollow interior of the rectangle, whereby, when the under-button 30 is received in the socket 45, the key-cap 29 is thereby prevented from movement laterally and rotationally relative to the light-strip 41. This mechanical constraint of the key-cap 29 ensures that the key-cap is glued to the light-strip accurately in its correct predetermined position.

The button-receiving socket 45 also serves other functions. The walls of the socket 45, being of opaque material, prevent leakage of light sideways out from the under-button 30. Also, the walls of the socket 45, especially if coloured white, serve to reflect light back into the under-button, and hence into the key-cap, whereby the light shining through the windows 36 is all the brighter. Also, the walls of the socket 45 serve as a tray, to catch any (liquid) adhesive that might be squeezed out from between the under-surface 38 and the overface 43.

An under-block 47 is attached to the underface 49 of the light-strip 41. The under-block 47 is of opaque and reflective material, which serves to prevent leakage of light out underneath the light-strip 41, and to reflect light back into the light-strip.

Just as the under-button 30 resided in the button-receiving socket 45, so the under-block 47 resides in the block-receiving socket 50. The socket 50 is formed in the middle of a membrane or diaphragm or web 52. The web 52 is co-molded or bonded onto respective ledges 54 on the rails 25 of the frame 23.

The web 52 is of a flexible material such as silicone rubber. The webs have enough inherent stiffness to hold the keys, when not pressed, in their correct relationships and positions. Thus, the inherent stiffness of the web 52 is enough to hold the thickened actuator portion 56 of the web 52, underneath the block-receiving socket 50, clear of the key-switch 58 on the PCB 21. On the other hand, it is very easy for the user to exert enough downwards force on the key-cap 29 to depress the key, and thereby to bring the actuator 56 into contact with the key-switch 58. The force required to depress the key, however, is large enough that the person can feel a resistance to the pressure of their finger on the key.

In many previous designs of key-pad unit, an under-button of the key-cap has engaged directly into a socket formed in the flexible web. By contrast, in the present design, the under-button 30 of the key-cap engages the socket 45 attached on top of the light-strip 41, and the under-block 47 attached underneath the light-strip 41 engages the socket 50 formed in the web 52. In the present design, by contrast, the light-strip 41 is interposed between the key-cap 29 and the flexible web 52. As such, it will be understood that the light-strip 41 is now called upon to move (downwards), and to flex, somewhat, when the keys are depressed.

Thus, in the present design, the light-strip 41 should be flexible. But it is recognised that the light-transmitting material from which light-strips are typically made does have the desired degree of flexibility (that is to say, the ability to be flexed countless times without sustaining damage). In previous designs, the ability of the light-transmitting material to flex, and to move with the keys, has not been exploited, or not fully exploited.

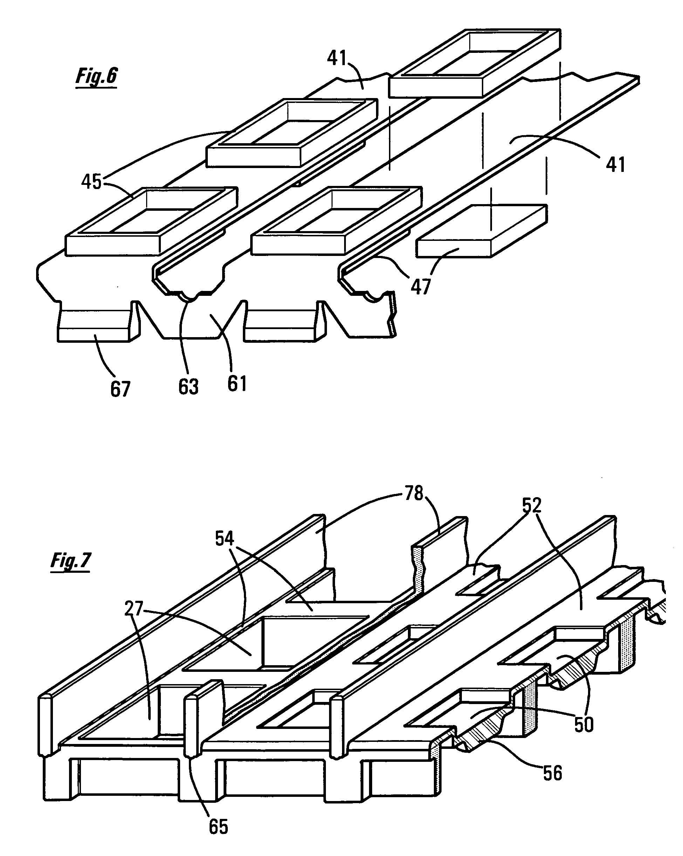

In a typical key-pad unit, there are between e.g fifteen and e.g thirty or more keys, arranged in e.g four or five rows. In the present design, there are as many light-strips 41 as rows of keys. As shown in Fig.6, the several light-strips 41 are joined together at their ends, by means of linking straps 61. The straps 61 are formed on the ends of the light-strips 41, and may be regarded as joining the rolled-over ends of the light-strips.

The straps 61 are formed with respective notches 63, which engage underneath respective tenons 65 that are molded into the frame 23. Thus, for assembly, the straps 61 are stretched over, and snap underneath, the tenons 65.

Between the straps 61, the rolled-over ends of the light-strips 41 are formed with light-catchers 67. These light-catchers 67 comprise thickened areas of the light-strip material. The designer arranges that the respective under-faces 69 of the light-catchers 67, when the key-pad unit 20 is assembled to its PCB 21, lie positioned directly over respective light-emitting-diodes 70 attached to the PCB 21. Thus, light enters the light-strips 41 from the LEDs via the respective light-catchers 67.

The several light-strips 41 preferably are formed from a single flat sheet of light-transmitting material, in which the form of the light-strips is stamped out. The form of the linking-straps 61 is provided also by the stamping. For co-molding the button-receiving sockets 45, and the under-blocks 47, the sheet of light-transmitting material is laid in the mold, and then the sockets and blocks are formed by compression-molding. Preferably, the stamping of the sheet is done after the items have been co-molded onto the sheet. The light-catchers 67 also can be co-molded onto the sheet, preferably using clear or transparent rubber material.

As shown, the light-catchers 67 are somewhat thicker than the light-strips themselves. Thus, the light-catcher serves as a collecting hood, for collecting light from the LED. Typically, the light-catchers 67 would be one mm thick, where the light-strips 41 are thinner - typically less than 0.4 mm thick, down to about 0.1 mm thick.

The key-pad unit 20 comprises the several key-caps 29, the linked-together light-strips 41, the frame 23 with its co-molded webs 52, and a light-shielding sheet 72, This key-pad unit 20 can be simply lowered into position upon the PCB, without the need for complex physical or electrical connections.

The light-shielding sheet 72 inhibits light from leaking out into the spaces between the keys. It is preferably made of strips of black plastic film, with cut-outs for the under-buttons 30, disposed respectively along the lengths of the rows of keys.

The LEDs 70 are surface-mounted devices, SMDs, which are simply and directly connected to the PCB 21. There is no expensive need for the LEDs to be furnished with e.g FPC connectors. The point is emphasised that the illuminated key-pad unit 20 is fully functional, with respect to the PCB 21, simply upon being placed in close proximity to the PCB, both as to actuating the PCB key-switches and as to receiving light for illumination.

The key-pad unit is a self-contained sub-assembly, which can be finish-manufactured prior to being placed over the circuit-board during final assembly of the PDA.

The designer preferably should see to it that each light-strip 41 has its own respective LED 70; and indeed has its own respective pair of LEDs, one at each end of the light-strip. It will be understood that the LEDs, arranged thus, can be actuated other than in unison. Because the light-strips 41 are illuminated each by its own (pair of) LEDs, the different rows of keys can be illuminated e.g in patterns or cascades, and can be of different colours. Alternatively, especially in cases where the number of keys is small, it can be arranged that all the individual keys have their own respective individual light-strips, and their own respective LEDs.

Having the light-strips 41 in direct contact with the key-caps 29 means that the available light is used very efficiently: thus, the illumination can be brighter than has been the case with previous illuminated key-pads; or alternatively the electrical (battery) power needed to illuminate the keys can be significantly reduced; or the illumination can be maintained for a longer period of time.

The SMT LEDs, as shown, shine upwards with respect to the PCB. Thus, the light-catchers 67 have to be angled downwards in order to receive the light. In some installations, it is preferred to use side-shining SMT LEDs, whereby the light-strips do not have to be wrapped over the edge of the frame. Side-shining LEDs are generally more costly than top-shining, but the light-strips are simplified.

Upon assembly of the key-pad unit 20 to the PCB 21, dowels 74 underneath the rails 25 of the frame 23 engage corresponding holes 76 in the PCB 21, for location purposes. Apart from that, no other physical or electrical or light-transmitting connections are required between the key-pad unit 20 and the PCB 21.

The frame 23 is of rigid plastic, and preferably is black in colour for light-shielding effect. The rails 25 that run widthwise across the PDA preferably, as shown, can be surmounted by rulers or dividers 78, which lie between adjacent rows of keys. It will be understood that dividing the rows of keys by a non-depressible ruler can be of considerable advantage to the user or operator of the PDA key-pad. The rulers 78 lie between, and serve to separate, the light-strips 41. The rulers 78 may be chrome-plated, or decorated with NCVM (non-conductive vapour metallization).

The "feel" of the key, when it is pressed, is important. The under-block 47 and the rectangle of the button-receiving socket 45 serve to stiffen the flexible light-strip 41 in the region of the key, for a good key feel. Also, the actuator 56 between the key-cap 29 and the key-switch 58 is important as regards the feel of the key. Because the actuator 56 is a thick mass, but is made of soft flexible material, the key feels firm enough, but yet there is no discernible bottoming of the key. Bottoming has a bad feel, and also can permit damage e.g to the PCB key-switch caused by overpushing.

To improve the feel of the keys, also the key-switches 58 preferably are slightly preloaded by the respective actuators 56, e.g by up to 0.15 mm of interference. Interference is preferred over a gap between the actuator and the key-switch, not only because lost travel would have a bad feel, but to supplement the firmness with which the key is held in its nominal position, when not depressed.

Co-molding the light-strips with the sockets and blocks permits or enables a combination of material properties. The light-strips, being attached between the key-caps and the actuators, need to be flexible enough to travel downwards, with the keys, when the keys are depressed. The light-strips 41 should also be flexible enough that when one of the keys is depressed, the keys adjacent to it in the row are not dragged down with it.

Terms of orientation, such as "above", down", "left", and the like, when used herein are intended to be construed as follows. When the terms are applied to an apparatus, the apparatus is distinguished by the terms only if there is not one single orientation into which the apparatus (or an image of the apparatus) can be placed, in which the terms can be applied consistently.

The numerals used in the drawings may be collated as:-
- 20: key-pad unit
- 21: circuit-board PCB
- 23: rigid plastic frame
- 25: rail
- 27: space or pocket
- 29: key-cap
- 30: under-button
- 32: visible outer surface
- 34: mask or coating
- 36: window
- 38: under-surface of under-button 30
- 41: light-strip
- 43: overface of light-strip 41
- 45: button-receiving socket
- 47: under-block
- 49: underface of light-strip 41
- 50: block-receiving socket
- 52: resilient membrane, diaphragm, or web
- 54: ledge
- 56: actuator
- 58: PCB key-switch
- 61: linking strap
- 63: notch
- 65: tenon
- 67: light-catcher
- 69: under-face of light-catcher 67
- 70: light-emitting diode LED
- 72: light-shielding sheet
- 74: dowel
- 76: dowel-hole
- 78: ruler

## Claims

1. An illuminated key-pad comprising:
a frame (23);
a set of keys assembled in at least two rows and mounted on the frame; and
at least two light strips (41) disposed along the at least two rows of keys, the at least two light strips comprising a respective overface; **characterized in that**
the at least two light strips (41) are linked at their ends by respective linking straps (61);
whereby the linking straps are formed with notches (63) hooked under tenons (65) formed in the frame (23).

2. The key-pad of Claim 1 wherein the at least two light strips are made of a transparent or translucent material.

3. The key-pad of Claim 1 or claim 2 wherein the at least two light strips comprises light catchers at each end thereof.

4. The key-pad of Claim 1, 2 or 3, wherein:
each key in the set of keys comprises a key-cap;
each key-cap comprising a visible over-surface and a non-visible under-surface;
whereby the overface of one of the light strips is in a face-to-face and a direct light-transmitting relationship with the under-surface of each of the key-caps.

5. The key-pad as claimed in any preceding Claim wherein the at least two light strips comprise under-blocks to engage a corresponding block socket.

6. The key-pad of Claim 5 wherein the under-blocks are co-molded with the material of the light strip.

7. The key-pad of Claim 4 wherein the overface of each light-strip is in direct touching contact with the under-surface of each of the key-caps.

8. The key-pad of Claim 4 wherein each of the respective key-caps comprises an over-surface having a window displaying a key-identification marking.

9. The key-pad of Claim 4 wherein:
each key-cap is provided with a respective under-button; and
each of the light strips comprising a set of button-receiving sockets adapted to engage the respective under-buttons;
such that each button-receiving socket is arranged to position the respective under-button laterally and rotationally with respect to each light strip.

10. The key-pad of Claim 9 wherein each of the set of button-receiving sockets is bonded to the overface of the respective light strip

11. The key-pad of Claim 9 wherein each button-receiving socket comprises walls of opaque material to reflect light back into the respective under-button of each key-cap.

12. The key-pad of any preceding Claim further comprising a flexible web structure comprising block sockets.

13. The key-pad of Claim 12 wherein each key-cap is urged by the web structure into a respective rest position whereby each key-cap can be depressed against the web structure.

14. The key-pad of Claim 12 wherein the frame is configured as a grid wherein the frame comprises rails that define pockets respective to the key-caps, the pockets being provided between the rails.

15. The key-pad of Claim 14 wherein the web structure is secured to the rails and is arranged in the pockets of the frame.

## Patentansprüche

1. Beleuchtete Tastatur, die aufweist:
einen Rahmen (23);
einen Satz von Tasten, die in zumindest zwei Reihen angeordnet sind und
an dem Rahmen angebracht sind; und
zumindest zwei Lichtstreifen (41), die entlang der zumindest zwei Reihen von Tasten angeordnet sind, wobei die zumindest zwei Lichtstreifen eine jeweilige Oberfläche aufweisen;
**dadurch gekennzeichnet, dass**
die zumindest zwei Lichtstreifen (41) an ihren Enden durch jeweilige Verbindungsbänder (61) verbunden sind;
wobei die Verbindungsbänder mit Einkerbungen (63) ausgebildet sind, die unter Zapfen (65) eingehakt werden, die in dem Rahmen (23) ausgebildet sind.

2. Tastatur gemäß Anspruch 1, wobei die zumindest zwei Lichtstreifen aus einem transparenten oder transluzenten Material bestehen.

3. Tastatur gemäß Anspruch 1 oder Anspruch 2, wobei die zumindest zwei Lichtstreifen Lichtfänger an jedem Ende davon aufweisen.

4. Tastatur gemäß Anspruch 1, 2 oder 3, wobei:
jede Taste in dem Satz von Tasten eine Tastenkappe aufweist;
jede Tastenkappe eine sichtbare Oberfläche und eine nicht-sichtbare Unterseite aufweist;
wobei die Oberfläche eines der Lichtstreifen in einer Fläche-an-Fläche- und direkten lichtdurchlässigen Beziehung zu der Unterseite jeder der Tastenkappen steht.

5. Tastatur gemäß einem vorhergehenden Anspruch, wobei die zumindest zwei Lichtstreifen Unter-Blöcke aufweisen, um mit einer entsprechenden Blockfassung in Eingriff zu sein.

6. Tastatur gemäß Anspruch 5, wobei die Unter-Blöcke zusammen mit dem Material des Lichtstreifens geformt sind.

7. Tastatur gemäß Anspruch 4, wobei die Oberfläche jedes Lichtstreifens in einem direkten Berührungskontakt mit der Unterseite jeder der Tastenkappen ist.

8. Tastatur gemäß Anspruch 4, wobei jede der jeweiligen Tastenkappen eine Oberfläche aufweist, die ein Fenster hat, das eine Tasten-Identifikations-Markierung zeigt.

9. Tastatur gemäß Anspruch 4, wobei:
jede Tastenkappe mit einer jeweiligen Unter-Taste versehen ist; und
jeder der Lichtstreifen einen Satz von Tasten-aufnehmenden Fassungen aufweist, die ausgebildet sind, die jeweiligen Unter-Tasten in Eingriff zu halten;
so dass jede Taste-aufnehmende Fassung ausgebildet ist, die jeweilige Unter-Taste seitlich und rotational in Bezug auf jeden Lichtstreifen zu positionieren.

10. Tastatur gemäß Anspruch 9, wobei jede des Satzes von Tasten-aufnehmenden Fassungen mit der Oberfläche des jeweiligen Lichtstreifens verbunden ist.

11. Tastatur gemäß Anspruch 9, wobei jede Tasten-aufnehmende Fassung Wände aus lichtundurchlässigem Material aufweist, um Licht zurück in die jeweilige Unter-Taste jeder Tastenkappe zu reflektieren.

12. Tastatur gemäß einem vorhergehenden Anspruch, die weiter eine flexible Gitterstruktur aufweist, die Block-Fassungen aufweist.

13. Tastatur gemäß Anspruch 12, wobei jede Tastenkappe von der Gitterstruktur in eine jeweilige Ruheposition gebracht wird, wodurch jede Tastenkappe gegen die Gitterstruktur gedrückt werden kann.

14. Tastatur gemäß Anspruch 12, wobei der Rahmen als ein Raster konfiguriert ist, wobei der Rahmen Leisten aufweist, die Taschen jeweils für die Tastenkappen definieren, wobei die Taschen zwischen den Leisten vorgesehen sind.

15. Tastatur gemäß Anspruch 14, wobei die Gitterstruktur an den Leisten befestigt ist und in den Taschen des Rahmens angeordnet ist.

## Revendications

1. Clavier éclairé comprenant :
un châssis (23),
un jeu de touches assemblées en au moins deux rangées et montées sur le châssis ; et
au moins deux réglettes d'éclairage (41) disposées le long desdites au moins deux rangées de touches, lesdites au moins deux réglettes d'éclairage comprenant une face de recouvrement respective ; **caractérisé en ce que**
lesdites au moins deux réglettes d'éclairage (41) sont reliées à leurs extrémités par des brides de connexion (61) respectives ;
les brides de connexion (61) étant pourvues d'encoches (63) accrochées sous des tenons (65) formés dans le châssis (23).

2. Clavier selon la revendication 1, dans lequel lesdites au moins deux réglettes d'éclairage sont constituées d'un matériau transparent ou translucide.

3. Clavier selon la revendication 1 ou la revendication 2, dans lequel lesdites au moins deux réglettes d'éclairage comprennent des éléments de collecte de lumière à chacune de leurs extrémités.

4. Clavier selon la revendication 1, 2 ou 3, dans lequel :
chaque touche du jeu de touches comprend un cache de touche ;
chaque cache de touche comprend une surface supérieure visible et une surface inférieure invisible ;
la face de recouvrement d'une des réglettes d'éclairage se trouvant en face à face et en relation de transmission de lumière directe avec la surface inférieure de chacun des caches de touches.

5. Clavier selon l'une quelconque des revendications précédentes, dans lequel lesdites au moins deux réglettes d'éclairage comprennent des sous-blocs destinés à venir en prise avec une douille de bloc correspondante.

6. Clavier selon la revendication 5, dans lequel les sous-blocs sont moulés conjointement avec le matériau de la réglette d'éclairage.

7. Clavier selon la revendication 4, dans lequel la face de recouvrement de chaque réglette d'éclairage est au toucher direct de la surface inférieure de chacun des caches de touches.

8. Clavier selon la revendication 4, dans lequel chacun des caches de touches respectifs comprend une surface supérieure pourvue d'une fenêtre affichant une marque d'identification de touche.

9. Clavier selon la revendication 4, dans lequel :
chaque cache de touche est pourvu d'un sous-bouton respectif ; et
chacune des réglettes d'éclairage comprend au moins un jeu de douilles réceptrices de bouton aptes à venir en prise avec les sous-boutons respectifs ;
de telle sorte que chaque douille réceptrice de bouton soit agencée pour positionner le sous-bouton respectif latéralement et en rotation relativement à chaque réglette d'éclairage.

10. Clavier selon la revendication 9, dans lequel chaque douille du jeu de douilles réceptrices de bouton est liée à la face de recouvrement de la réglette d'éclairage respective.

11. Clavier selon la revendication 9, dans lequel chaque douille réceptrice de bouton comprend des parois de matériau opaque pour réfléchir la lumière dans le sous-bouton respectif de chaque cache de touche.

12. Clavier selon l'une quelconque des revendications précédentes, comprenant, en outre, une structure de bande souple comprenant les douilles de blocs.

13. Clavier selon la revendication 12, dans lequel chaque cache de touche est sollicité par la structure de bande jusqu'à une position de repos respective de telle sorte que chaque cache de touche puisse être pressé contre la structure de bande.

14. Clavier selon la revendication 12, dans lequel le châssis est conçu sous la forme d'une grille, le châssis comprenant des rails qui définissent des cavités respectivement aux caches de touches, les cavités étant situées entre les rails.

15. Clavier selon la revendication 14, dans lequel la structure de bande est fixée aux rails et est agencée dans les cavités du châssis.
